# EUROPÄISCHE PATENTANMELDUNG

(11) **EP 1 535 714 A2**
(43) Veröffentlichungstag der Anmeldung: **01.06.2005**
(21) Anmeldenummer: 04027055.5
(22) Anmeldetag: 13.11.2004
(51) Int. Cl.: B29C 44/56, B29C 44/58

(54) **Verfahren und Vorrichtung zur Herstellung von Schaumstoffblöcken im Flockenverbund**

(30) Priorität: 26.11.2003 DE 10355222
(71) Anmelder: Hennecke GmbH, 51379 Leverkusen (DE)
(72) Erfinder: Büchel, Bodo, 53639 Königswinter (DE); Wirth, Jürgen, 51147 Köln (DE); Klahre, Horst, 53757 Sankt-Augustin (DE)
(74) Vertreter: Weismantel, Lothar, Dr.

(57) **Zusammenfassung**

Die Erfindung betrifft ein Verfahren zur Herstellung von Schaumstoffblöcken im Flockenverbund in einer Vorrichtung umfassend einen Formkasten mit einem Boden und mehreren darauf stehenden aneinander grenzenden Formseitenwänden und einem in Richtung des Bodens bewegbaren Stempel, bei dem mindestens eine der Formseitenwände um eine am Boden gehaltene im wesentlichen waagrechte Schwenkachse zwischen einer nach außen weisenden Position und einer im wesentlichen senkrechten Position schwenkbar ist,
bei dem
(a) die Schaumstoffflocken mit einem Bindemittel vermischt werden und
(b) vor dem Einfüllen der Schaumstoffflocken in den Formkasten mindestens eine der Formseitenwände so nach außen geschwenkt wird, dass sich die Querschnittsfläche des Formkastens von unten nach oben erweitert, und
(c) die Schaumstoffflocken in den Formkasten eingefüllt werden, und anschließend
(d) die mindestens eine Formseitenwand so verstellt wird, dass die Querschnittsfläche des Formkastens über der Höhe im wesentlichen konstant ist, und
(e) die Schaumstoffflocken anschließend mittels des Stempels auf die gewünschte Dichte bzw. Schaumstoffblockhöhe verpresst und die Schaumstoffflocken dabei miteinander verbunden werden und
(f) der fertige Schaumstoffblock danach entformt wird.

## Beschreibung

Die Erfindung betrifft ein Verfahren und eine Vorrichtung zur Herstellung von Schaumstoffblöcken im Flockenverbund.

Für die Herstellung von Verbundschaum wird auf Flockengröße zerkleinerter Polyurethan-Weichschaum mit einem Bindemittel, beispielsweise einem Polyurethan-Prepolymer, vermischt, in einen Formkasten eingefüllt und auf die gewünschte Dichte oder Blockhöhe verpresst. Die in dem Polyurethan-Prepolymer noch vorhandenen freien Isocyanatgruppen reagieren z. B. mit Feuchtigkeit aus der Umgebung und bilden dabei Hamstoffverbindungen. Zur Beschleunigung der Reaktion kann auch Sattdampf durch den Boden des Formkastens und durch den Schaumstoffblock geleitet werden. Durch diese Maßnahme kann die Verweilzeit der Schaumstoffblöcke in dem Formkasten, die sogenannte Formstandzeit, erheblich verkürzt werden.

Die üblicherweise eingesetzten Formkästen weisen einen runden oder einen rechteckigen Querschnitt auf, der über die Höhe des Formkastens konstant ist.

Beim Eintrag der Schaumstoffflocken in den Formkasten, werden die Schaumstoffflocken üblicherweise manuell oder mit einer geeigneten Vorrichtung gleichmäßig über den Querschnitt des Formkastens verteilt, um Dichteunterschiede in horizontaler Richtung im fertigen Schaumstoffblock zu vermeiden.

Aufgrund des Eigengewichts der Schaumstoffflocken und der niedrigen Stauchhärte der aus den Schaumstofflocken gebildeten Schüttung kommt es aber zu einem erheblichen Dichteunterschied in der Schüttung in vertikaler Richtung. Die Schüttung hat daher im unteren Bereich eine deutlich höhere Dichte als im oberen Bereich.

Dies führt dazu, dass auch der nach der Verpressung erhaltene fertige Schaumstoffblock im unteren Bereich eine höhere Dichte aufweist als im oberen Bereich. Dieser unerwünschte Effekt macht sich umso stärker bemerkbar je höher der Formkasten und damit der Schaumstoffblock und je geringer die Dichte des fertigen Schaumstoffblocks ist.

Die Aufgabe der vorliegenden Erfindung bestand daher darin, ein Verfahren und eine Vorrichtung zur Herstellung von Schaumstoffblöcken im Flockenverbund zur Verfügung zu stellen, bei dem Schaumstoffblöcke mit im wesentlichen homogener Dichteverteilung in vertikaler Richtung erhalten werden können.

Die Erfindung betrifft ein Verfahren zur Herstellung von Schaumstoffblöcken im Flockenverbund in einer Vorrichtung umfassend einen Formkasten mit einem Boden und mehreren darauf stehenden aneinander grenzenden Formseitenwänden und einem in Richtung des Bodens bewegbaren Stempel, bei dem mindestens eine der Formseitenwände um eine am Boden gehaltene im wesentlichen waagrechte Schwenkachse zwischen einer nach außen weisenden Position und einer im wesentlichen senkrechten Position schwenkbar ist,
bei dem
(a) die Schaumstoffflocken mit einem Bindemittel vermischt werden und
(b) vor dem Einfüllen der Schaumstoffflocken in den Formkasten mindestens eine der Formseitenwände so nach außen geschwenkt wird, dass sich die Querschnittsfläche des Formkastens von unten nach oben erweitert, und
(c) die Schaumstoffflocken in den Formkasten eingefüllt werden, und anschließend
(d) die mindestens eine Formseitenwand so verstellt wird, dass die Querschnittsfläche des Formkastens über der Höhe im wesentlichen konstant ist, und
(e) die Schaumstoffflocken anschließend mittels des Stempels auf die gewünschte Dichte bzw. Schaumstoffblockhöhe verpresst und die Schaumstoffflocken dabei miteinander verbunden werden und
(f) der fertige Schaumstoffblock danach entformt wird.

Die Vermischung der Schaumstoffflocken mit dem Bindemittel kann dabei beispielsweise durch Besprühen der Schaumstoffflocken mit dem Bindemittel erfolgen. Als Bindemittel werden dabei Polyurethan-Prepolymere, Kleber oder andere geeignete Bindemittel eingesetzt. Bevorzugt werden Prepolymere aus einer Polyolkomponente, bevorzugt einem Polyetherpolyol, und einer Isocyanatkomponente, bevorzugt Toluylendiisocyanat und / oder Methylendiphenyldiisocyant eingesetzt.

Die Erfindung beruht darauf, dass der Querschnitt des Formkastens beim Einfüllen der Schaumstoffflocken nach oben hin erweitert wird, um den aufgrund des Eigengewichts der Schaumstoffflocken auftretenden Dichteunterschied in der Schüttung durch unterschiedliches Vorverdichten auf den verschiedenen Höhen der Schüttung auszugleichen.

Erfindungsgemäß erfolgt dies dadurch, dass eine oder mehrere Formseitenwände vor dem Einfüllen der Schaumstoffflocken durch Kippen schräg gestellt werden. Die Seitenwände des Formkastens können zu diesem Zweck unten an der Verbindungsstelle zum Boden drehbar gelagert werden.

Die Formseitenwände werden dazu vor dem Einfüllen der Schaumstoffflocken bevorzugt so weit nach außen geschwenkt, dass die Schaumstofflocken nach dem Einfüllen und nach dem Zurückschwenken der Formseitenwände in die senkrechte Position in allen Höhen in etwa genauso stark verdichtet sind wie im unteren Bereich des Formkastens aufgrund des Eigengewichts der Schüttung. Die dazu geeignete Weite der Schwenkbewegung, das heißt der geeignete Kipp- oder Schwenkwinkel der Formseitenwände, ist durch einfache Versuche zu ermitteln.

Ziel der Optimierung der Weite der Schwenkbewegung ist im Allgemeinen stets, eine homogene Dichteverteilung im fertigen Schaumstoffblock einzustellen. Da die Schaumstoffflocken in der Schüttung aber nur begrenzt fließfähig sind, verteilt sich die Presskraft beim Verpressen nicht immer gleichmäßig in alle Raumrichtungen. Daher kann es trotz ursprünglich homogener Dichteverteilung in der Schüttung beim Verpressen zu einer Ungleichverteilung der Dichte in vertikaler Richtung im fertigen Schaumstoffblock kommen. Dieser Effekt sollte bei der Auswahl des geeigneten Kipp- oder Schwenkwinkels möglichst berücksichtigt, beispielsweise indem in Vorversuchen der Formkasten bei verschiedenen Kipp- oder Schwenkwinkeln befüllt wird, die Formseitenwände dann in die senkrechte Position zurückgeschwenkt werden, die Schüttung dann verpresst und die Verteilung der Dichte im fertigen Schaumstoffblock anschließend untersucht wird.

Üblicherweise liegt der Kipp- oder Schwenkwinkel im Bereich von zwischen 0,5 und 30°, bevorzugt zwischen 1 und 20° und besonders bevorzugt zwischen 2 und 10°.

Grundsätzlich lassen sich mit dem erfmdungsgemäßen Verfahren jedoch auch gezielt beliebige Profile der Dichte über der Höhe des fertigen Schaumstoffblocks einstellen.

In einer bevorzugten Ausführungsform des erfindungsgemäßen Verfahrens ist in der Vorrichtung die mindestens eine Formseitenwand in mindestens zwei übereinander angeordnete Teilsegmente aufgeteilt, wobei jedes der Teilsegmente um eine im wesentlichen waagrechte Schwenkachse schwenkbar ist, und wobei das unterste Teilsegment zwischen einer nach außen weisenden Position und einer im wesentlichen senkrechten Position schwenkbar ist und wobei die restlichen Teilsegmente zwischen einer nach außen weisenden Position und einer senkrechten Position schwenkbar sind. Vor dem Einfüllen der Schaumstoffflocken werden dann alle Teilsegmente so nach außen geschwenkt, dass sich die Querschnittsfläche des Formkastens von unten nach oben erweitert und alle Teilsegmente in unterschiedlichem Winkel gegen die Horizontale geneigt sind.

Auf diese Weise kann erreicht werden, dass auch über der Füllhöhe nicht lineare Dichtegradienten nach dem Verschwenken der Seitenelemente in die Senkrechte ausgeglichen werden können.

In einer weiteren bevorzugten Ausführungsform des erfindungsgemäßen Verfahrens besteht in der Vorrichtung der Boden aus wenigstens zwei horizontal gegeneinander beweglichen, vorzugsweise zumindest teilweise ineinander greifenden, Bodenelementen. Vor dem Einfüllen der Schaumstoffflocken in den Formkasten werden die Bodenelemente auseinander bewegt, so dass sich die Querschnittsfläche des Bodens erweitert. Nach dem Einfüllen der Schaumstoffflocken in den Formkasten werden die Bodenelemente dann wieder zusammengeführt.

Auf diese Weise kann die Bauhöhe der gesamten Pressvorrichtung minimiert werden.

Die Erfindung betrifft weiterhin eine Vorrichtung zur Herstellung von Schaumstoffblöcken im Flockenverbund, umfassend einen Formkasten mit einem Boden und mehreren darauf stehenden aneinander grenzenden Formseitenwänden und einem in Richtung des Bodens bewegbaren Stempel, dadurch gekennzeichnet, dass
mindestens eine der Formseitenwände um eine am Boden gehaltene im wesentlichen waagrechte Schwenkachse zwischen einer nach außen weisenden Position und einer im wesentlichen senkrechten Position schwenkbar ist.

Die im wesentlichen waagrechte Schwenkachse ist dabei bevorzugt waagrecht. Die im wesentlich senkrechte Position ist bevorzugt senkrecht. Erfindungsgemäß sind aber auch Vorrichtungen umfasst, bei denen die Schwenkachse oder die senkrechte Position leicht, beispielweise um einen Winkel von bis zu 20°, vorzugsweise um einen Winkel von kleiner 10°, von der Waagerechten bzw. Senkrechten abweicht.

Der Formkasten besitzt vorzugsweise einen runden, ovalen oder rechteckigen Querschnitt. Andere Querschnittsformen sind aber ebenfalls möglich.

In einer bevorzugten Ausführungsform sind die schwenkbaren Formseitenwände mittels einer Hydraulikvorrichtung schwenkbar.

In einer bevorzugten Ausführungsform sind die schwenkbaren Formseitenwände in mindestens zwei übereinander angeordnete Teilsegmente aufgeteilt, wobei jedes der Teilsegmente um eine im wesentlichen waagrechte Schwenkachse schwenkbar ist, wobei das unterste Teilsegment zwischen einer nach außen weisenden Position und einer im wesentlichen senkrechten Position schwenkbar ist und wobei die restlichen Teilsegmente zwischen einer nach außen weisenden Position und einer senkrechten Position schwenkbar sind. In der mit dem untersten Teilsegment parallelen Position liegen alle Teilsegmente dann in einer gemeinsamen, vorzugsweise senkrechten Ebene.

In einer anderen bevorzugten Ausführungsform besteht der Boden aus wenigstens zwei horizontal gegeneinander beweglichen, vorzugsweise zumindest teilweise ineinander greifenden, Bodenelementen. Die Bodenelemente können dabei beispielsweise teleskopartig ineinander greifend und gegeneinander verschiebbar sein.

Die Erfindung wird anhand der nachfolgenden Figuren näher erläutert. Es zeigen
- Figuren 1 bis 6: den schematischen Ablauf des erfindungsgemäßen Verfahrens in einer Abfolge von Verfahrensschritten
- Figur 7: eine Ausführungsform der erfindungsgemäßen Vorrichtung, bei der die schwenkbaren Formseitenwände in Teilsegmente unterteilt ist.
- Figur 8: eine Draufsicht auf die Vorrichtung aus Figur 7
- Figuren 9 bis 11: den schematischen Ablauf des erfindungsgemäßen Verfahrens in einer Folge von Verfahrensschritten, bei dem eine Vorrichtung mit gegeneinander beweglichen Bodenelementen eingesetzt wird.

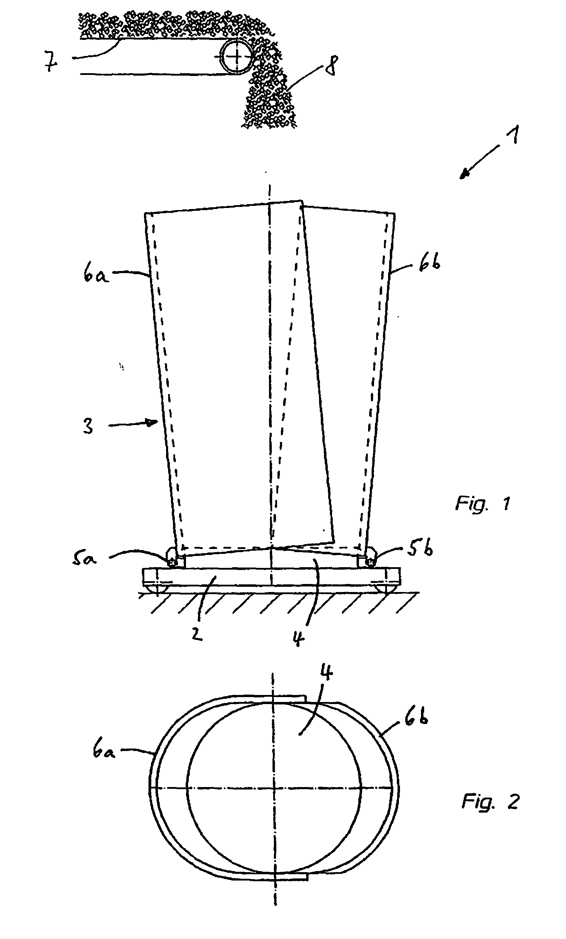

In den Figuren 1 bis 6 ist der Ablauf des erfindungsgemäßen Verfahrens vom Befüllen des Formkastens bis zur Entformung des Schaumstoffblocks dargestellt.

Figur 1 zeigt eine erfindungsgemäße Vorrichtung 1 zur Herstellung von Schaumstoffblöcken im Flockenverbund enthaltend einen Transportwagen 2, auf dem ein Formkasten 3 angeordnet ist. Der Formkasten 3 selbst enthält einen Boden 4, an dem Schwenkachsen 5a und 5b befestigt sind, mittels derer die Formseitenwände 6a und 6b aus der senkrechten Position in eine nach außen weisende Position geschwenkt werden können. In Figur 1 ist der Formkasten in dem Zustand gezeigt, in dem die Formseitenwände 6a und 6b in die nach außen weisende Position geschwenkt sind.

Die mit dem Bindemittel vermischten Schaumstoffflocken 8 werden über eine Transporteinrichtung 7, die über dem Formkasten 3 angeordnet ist, in den Formkasten 3 gefördert bis der gewünschte Füllgrad erreicht ist.

Figur 2 zeigt eine Draufsicht auf den Formkasten 3 in dem Zustand, in dem die Formseitenwände 6a und 6b in die nach außen weisende Position geschwenkt sind. Vor dem Beginn des Einfüllens ist der Boden 4 noch nicht mit Schaumstoffflocken bedeckt.

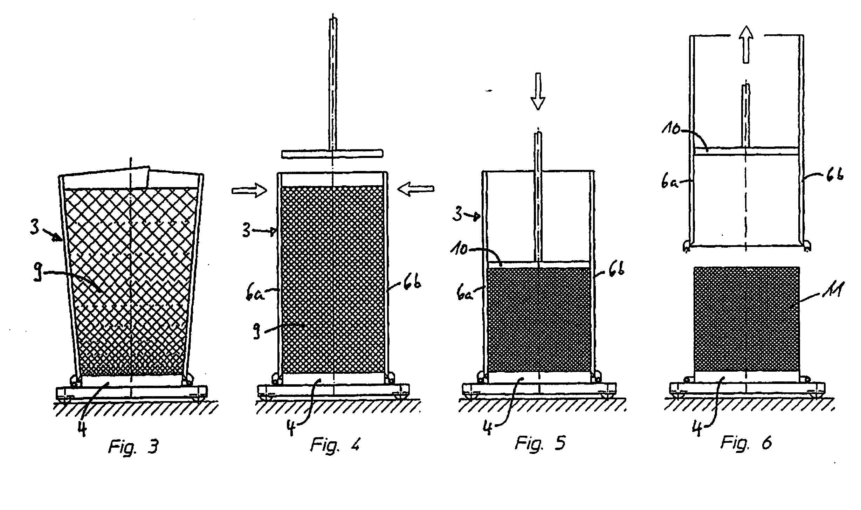

Figur 3 zeigt den Formkasten 3 nach der Befüllung mit den Schaumstoffflocken. Aufgrund des Eigengewichts der Schaumstoffflocken nimmt die Dichte der Schaumstoffflocken in der Schüttung 9 mit steigendem Abstand vom Boden 4 ab. Dies ist in Figur 3 durch eine nach oben hin abnehmende Dichte der Schraffur bildlich dargestellt.

Figur 4 zeigt den Formkasten 3 nachdem die Formseitenwände 6a und 6b in die senkrechte Position zurückgeschwenkt wurden, so dass sich ein über die Höhe konstanter Querschnitt des Formkastens ergibt. Die Schwenkbewegung der Formseitenwände 6a, 6b ist dabei durch die beiden Pfeile symbolisiert. Durch das Schwenken der Formseitenwände 6a, 6b in die senkrechte Position werden die Schaumstoffflocken in der Schüttung 9 verdichtet, wobei die Schaumstoffflocken um so stärker verdichtet werden je größer ihr Abstand vom Boden 4 ist.

Figur 5 zeigt den Formkasten 3 nachdem der Stempel 10 in den Formkasten 3 in vertikaler Richtung hineingefahren wurde und die Schüttung auf die gewünschte Blockhöhe oder die gewünschte Dichte verdichtet hat, um einen Schaumstoffblock zu erhalten.

Nach Ablauf der Formstandzeit wird der fertige Schaumstoffblock 11 entformt, indem der Stempel 10 und die Formseitenwände 6a, 6b so weit nach oben abgezogen werden, dass der Schaumstoffblock 11 frei auf dem Boden 4 aufliegt und entnommen werden kann. Dieser Zustand ist in Figur 6 gezeigt. Alternativ können nach dem der Stempel nach oben abgezogen worden ist beispielsweise aber auch die Formseitenwände nach außen geklappt werden.

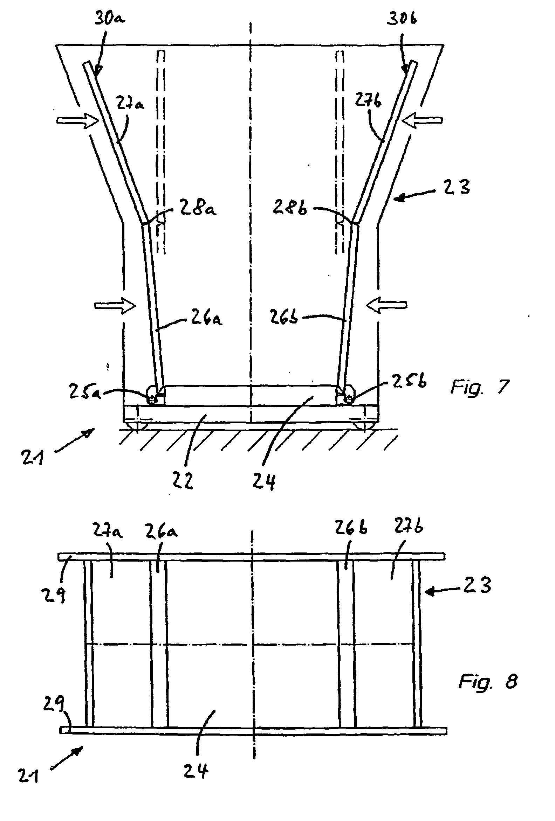

Figur 7 zeigt eine besondere Ausführungsform der erfindungsgemäßen Vorrichtung 21 enthaltend einen Transportwagen 22, auf dem ein Formkasten 23 angeordnet ist. Der Formkasten selbst enthält einen Boden 24, an dem Schwenkachsen 25a und 25b befestigt sind. Die beiden in Figur 7 dargestellten, einander gegenüber liegenden Formseitenwände 30a, 30b sind jeweils in ein unteres Teilsegment 26a, 26b und ein oberes Teilsegment 27a, 27b unterteilt.

Die beiden unteren Teilsegmente 26a, 26b stehen dabei auf den waagrechten Schwenkachsen 25a, 25b und sind mit ihnen durch Haltevorrichtungen lösbar verbunden. Die Oberkanten der unteren Teilsegmente 26a, 26b sind mit den Unterkanten der oberen Teilsegmente 27a, 27b über waagrechte Schwenkachsen 28a, 28b in Form eines Gelenks verbunden.

In der Darstellung in Figur 7 sind sowohl die unteren Teilsegmente 26a, 26b als auch die oberen Teilsegmente 27a, 27b in die nach außen weisende Position geschwenkt. Dabei sind die oberen Teilsegmente 27a, 27b in eine stärkere Schräglage gekippt als die unteren Teilsegmente 26a, 26b, beispielsweise um eine in Vorversuchen festgestellte ungleichmäßige Verdichtung beim späteren Verpressen auszugleichen. Wie durch die Pfeile angedeutet können die Teilsegmente 26a, 26b, 27a, 27b nach dem Befüllen des Formkastens 23 mit Schaumstoffflocken wieder in die senkrechte Position (angedeutet durch die gestrichelten Linien) zurückgeschwenkt werden.

Figur 8 zeigt eine Draufsicht auf den in Figur 7 dargestellten Formkasten 23 enthaltend den Boden 24, die schwenkbaren Formseitenwände mit den unteren Teilsegmenten 26a, 26b und den oberen Teilsegmenten 27a, 27b und den beiden feststehenden Formseitenwänden 29.

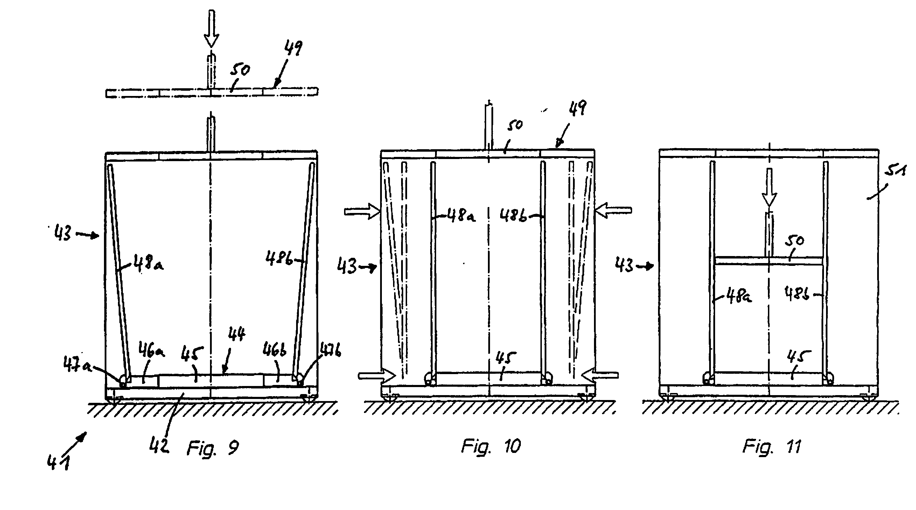

In Figur 9 ist eine bevorzugte Ausführungsform der erfindungsgemäßen Vorrichtung 41 gezeigt. Sie enthält einen Transportwagen 42, auf dem ein Formkasten 43 angeordnet ist. Der Formkasten 43 enthält einen Boden 44, der aus einer mittleren, teilweise hohlen Bodenplatte 45 und zwei teleskopartig verschiebbaren, in der mittleren Bodenplatte 45 teilweise versenkbaren Bodenelementen 46a und 46b besteht. An den nach außen weisenden Enden der versenkbaren Bodenelemente 46a und 46b sind jeweils waagrechte Schwenkachsen 47a, 47b befestigt, mittels derer die Formseitenwände 48a, 48b aus der senkrechten Position in die nach außen weisende Position geschwenkt werden können. Der Formkasten ist weiterhin mit einem vertikal verschiebbaren Formdeckel 49 ausgerüstet, in dem der Stempel 50 zur Verpressung der Schaumstoffflocken integriert ist.

In dem in Figur 9 dargestellten Zustand sind die beiden versenkbaren Bodenelemente 46a und 46b aus der mittleren Bodenplatte 45 nach außen gefahren worden und die Formseitenwände 48a und 48b in die nach außen weisende Schräglage geschwenkt worden. Der Formkasten 43 ist dann bereit für die Befüllung mit den mit Bindemitteln versehenen Schaumstoffflocken. Nach dem Befüllen wird dann der Formdeckel 49 abgesenkt und auf den Formkasten 43 aufgelegt.

Nach dem Befüllen des Formkastens 43 mit den Schaumstofflocken und dem Auflegen des Formdeckels 49 werden - wie in Figur 10 dargestellt ― die Formseitenwände 48a und 48b wieder in die senkrechte Position zurückgeschwenkt und die beiden versenkbaren Bodenelemente 46a und 46b (in Figur 10 nicht mehr zu sehen) wieder in die mittlere Bodenplatte 45 hineingefahren, so dass sich ein gegenüber dem Füllvorgang insgesamt verkleinerter und über die Höhe des Formkastens 43 konstanter Querschnitt des Formkasten ergibt. Der Formkasten 43 ist dann bereit für die Verpressung der Schaumstoffflocken.

Die Verpressung erfolgt durch Absenken des Stempels 50 bis die gewünschte Höhe des Schaumstoffblocks bzw. die gewünschte Dichte erreicht ist. Die Schaumstoffflocken sind dabei zwischen der mittleren Bodenplatte 45 und dem Stempel 50, den in senkrechter Position befindlichen Formseitenwänden 48a, 48b und den beiden fest stehenden Seitenwänden 51 eingeschlossen. Vor der Entformung muss der Schaumstoffblock noch so lange in dem Formkasten 43 verweilen, bis sich ein fester Verbund zwischen den Schaumstofflocken und dem Bindemittel eingestellt hat.

## Patentansprüche

1. Verfahren zur Herstellung von Schaumstoffblöcken im Flockenverbund in einer Vorrichtung umfassend einen Formkasten (3; 23; 43) mit einem Boden (4; 24; 44) und mehreren darauf stehenden aneinander grenzenden Formseitenwänden (6a, 6b; 29, 30a, 30b; 48a, 48b, 51) und einem in Richtung des Bodens (4; 24; 44) bewegbaren Stempel (10; 50), bei dem mindestens eine der Formseitenwände (6a, 6b; 30a, 30b; 48a, 48b) um eine am Boden (4; 24; 44) gehaltene im wesentlichen waagrechte Schwenkachse (5a, 5b; 25a, 25b; 47a, 47b) zwischen einer nach außen weisenden Position und einer im wesentlichen senkrechten Position schwenkbar ist,
bei dem
(a) die Schaumstoffflocken mit einem Bindemittel vermischt werden und
(b) vor dem Einfüllen der Schaumstoffflocken in den Formkasten (3; 23; 43) mindestens eine der Formseitenwände (6a, 6b; 30a, 30b; 48a; 48b) so nach außen geschwenkt wird, dass sich die Querschnittsfläche des Formkastens (3; 23; 43) von unten nach oben erweitert, und
(c) die Schaumstoffflocken in den Formkasten (3; 23; 43) eingefüllt werden, und anschließend
(d) die mindestens eine Formseitenwand (6a, 6b; 30a, 30b; 48a, 48b) so verstellt wird, dass die Querschnittsfläche des Formkastens über der Höhe im wesentlichen konstant ist, und
(e) die Schaumstoffflocken anschließend mittels des Stempels (10; 50) auf die gewünschte Dichte bzw. Schaumstoffblockhöhe verpresst und die Schaumstoffflocken dabei miteinander verbunden werden und
(f) der fertige Schaumstoffblock danach entformt wird.

2. Verfahren nach Anspruch 1, bei dem in der Vorrichtung die mindestens eine Formseitenwand (30a, 30b) in mindestens zwei übereinander angeordnete Teilsegmente (26a, 26b, 27a, 27b) aufgeteilt ist, wobei jedes der Teilsegmente (26a, 26b, 27a, 27b) um eine im wesentlichen waagrechte Schwenkachse (25a, 25b, 28a, 28b) schwenkbar ist, und wobei das unterste Teilsegment (26a, 26b) zwischen einer nach außen weisenden Position und einer im wesentlichen senkrechten Position schwenkbar ist und wobei die restlichen Teilsegmente (27a, 27b) zwischen einer nach außen weisenden Position und einer senkrechten Position schwenkbar sind,
und bei dem vor dem Einfüllen der Schaumstoffflocken alle Teilsegmente (26a, 26b, 27a, 27b) so nach außen geschwenkt werden, dass sich die Querschnittsfläche des Formkastens (23) von unten nach oben erweitert und alle Teilsegmente (26a, 26b, 27a, 27b) in unterschiedlichem Winkel gegen die Horizontale geneigt sind.

3. Verfahren nach einem der Ansprüche 1 oder 2, bei dem in der Vorrichtung der Boden (44) aus wenigstens zwei horizontal gegeneinander beweglichen, vorzugsweise zumindest teilweise ineinander greifenden, Bodenelementen (45, 46a, 46b) besteht,
und bei dem vor dem Einfüllen der Schaumstoffflocken in den Formkasten (43) die Bodenelemente (45, 46a, 46b) auseinander bewegt werden, so dass sich die Querschnittsfläche des Bodens (43) erweitert, und nach dem Einfüllen der Schaumstoffflocken in den Formkasten (43) die Bodenelemente (45, 46a, 46b) wieder zusammengeführt werden.

4. Vorrichtung zur Herstellung von Schaumstoffblöcken im Flockenverbund, umfassend einen Formkasten (3; 23, 43) mit einem Boden (4; 24, 44) und mehreren darauf stehenden aneinander grenzenden Formseitenwänden (6a, 6b; 29, 30a, 30b; 48a, 48b, 51) und einem in Richtung des Bodens (4; 24; 44) bewegbaren Stempel (10; 50), **dadurch gekennzeichnet, dass**
mindestens eine der Formseitenwände (6a, 6b; 30a, 30b; 48a, 48b) um eine am Boden (4; 24; 44) gehaltene im wesentlichen waagrechte Schwenkachse (5a, 5b; 25a, 25b; 47a, 47b) zwischen einer nach außen weisenden Position und einer im wesentlichen senkrechten Position schwenkbar ist.

5. Vorrichtung nach Anspruch 4, **dadurch gekennzeichnet, dass** die mindestens eine Formseitenwand (30a, 30b) in mindestens zwei übereinander angeordnete Teilsegmente (26a, 26b, 27a, 27b) aufgeteilt ist, wobei jedes der Teilsegmente (26a, 26b, 27a, 27b) um eine im wesentlichen waagrechte Schwenkachse (25a, 25b, 28a, 28b) schwenkbar ist, wobei das unterste Teilsegment (26a, 26b) zwischen einer nach außen weisenden Position und einer im wesentlichen senkrechten Position schwenkbar ist und wobei die restlichen Teilsegmente (27a, 27b) zwischen einer nach außen weisenden Position und einer senkrechten schwenkbar sind.

6. Vorrichtung nach einem der Ansprüche 4 oder 5, **dadurch gekennzeichnet, dass** der Boden (44) aus wenigstens zwei horizontal gegeneinander beweglichen, vorzugsweise zumindest teilweise ineinander greifenden, Bodenelementen (45, 46a, 46b) besteht.
